# EUROPÄISCHE PATENTANMELDUNG

(11) **EP 0 748 818 A2**
(43) Veröffentlichungstag der Anmeldung: **18.12.1996**
(21) Anmeldenummer: 96108998.4
(22) Anmeldetag: 05.06.1996
(51) Int. Cl.: C08F 2/44, C08F 20/12

(54) **Hochgefüllte Kunststoffe mit Glitzereffekt**

(30) Priorität: 14.06.1995 DE 19521638
(71) Anmelder: Röhm GmbH, 64293 Darmstadt (DE)
(72) Erfinder: Ittmann, Günther, 64823 Gross-Umstadt (DE); Krieg, Manfred, Dr., 64289 Darmstadt (DE)

(57) **Zusammenfassung**

Die Erfindung betrifft hochgefüllte Kunststoff-Formkörper mit einer Oberfläche vom Aussehen eines mikrokristallinen Gesteins mit ausgeprägtem Glitzereffekt. Der Glitzereffekt wird durch Einbau von Flitterteilchen auf Kunststoffbasis mit einer Dichte von < 2 bewirkt. Es wird ein Verfahren zur Herstellung eines entsprechenden Formkörpers beschrieben, wobei alle Komponenten in ihrer Dichte einander angeglichen sind, wobei eine besonders lebendige gesteinsähnliche Oberfläche mit Glitzereffekt erzeugt wird.

## Beschreibung

### Gebiet der Erfindung

Die Erfindung betrifft hochgefüllte Kunststoff-Formkörper mit einer Oberfläche vom Aussehen eines mikrokristallinen Gesteins mit ausgeprägtem Glitzereffekt, sowie ein Verfahren zur Herstellung eines ensprechenden Formkörpers.

### Stand der Technik

Hochgefüllte Kunststoffharze, die im Aussehen Gesteinstypen imitieren, sind seit längerem bekannt (vgl. Ullmann's Enzyklopedia of Industrial Chemistry, 5th. Ed., Vol. A20, 494 - 300, VCH 1992). Sie haben auf dem Sanitär- und dem übrigen Haushaltssektor eine ganz erhebliche Bedeutung erlangt. Dabei galt Marmor- und Granitimitaten das besondere Interesse der Technik. Entsprechende Herstellungsverfahren sind z.B. in den DE-A 26 27 081, JP-A 02,202,445, WO 90/01 470, WO 91/11 404, EP-A 640 651, DE-A 38 21 116 angegeben worden.
Die DE-A 26 7 081 (US-A 4,159,301) sieht die Anwendung zweier Partikelarten in regelloser Verteilung vor, nämlich von farbigen bzw. ungefärbten undurchsichtigen Partikeln einerseits und farbigen oder ungefärbten durchsichtigen oder transparenten Teilchen andererseits, wobei beide Teilchenarten in der kleinsten Abmessung eine Mindestteilchengröße von > 200 µm aufweisen.

Die JP-A 02,202 445 (Chem. Abstr. 114, 8000t) empfiehlt zur Herstellung von Platten mit Granitcharakter die Extrusionsbeschichtung von thermoplastischen Tafeln mit einer Schicht mit einem Gehalt an Metallpulver und Weißpigment. Granitcharakter wird bei Küchenspülen und Sanitärartikeln aus Acrylharz auch durch Anwendung von Granit-Füllstoffteilchen erreicht (vgl. Modern Plastics International, Sept. 1991, pg. 32). Die so hergestellten Objekte haben eine hohe Füllstoffkonzentration in Oberflächennähe.

In der WO 91/11 404 wird ein imitierter farbiger Granit beschrieben, aufgebaut aus einer aus PMMA und Aluminiumoxidtrihydratpartikeln unter 100 µm Teilchendurchmesser enthaltenden Matrix, ferner PMMA-Partikeln im Bereich 100 bis 5 000 µm, gefüllt mit 50 - 70 Gew.-% Aluminiumoxidtrihydrat und bis 2,5 Gew.-% eines farblosen bis weißen Pigments sowie PMMA Partikel derselben Abmessung, die mit 0,1 - 2,5 Gew.-% Schwarzpigment gefüllt sind und desweiteren PMMA-Partikel derselben Abmessungen, die mit anderen Farbpigmenten gefüllt sind. Dem Absetzen der größeren Partikel wird durch die Anwendung rheologisch wirksamer Additive begegnet.
Eine hinsichtlich Teilchengröße und Pigment von der vorgenannten abweichenden Lehre wird in der WO 90/01 470 desselben Anmelders geboten.
Aus der DE-A 38 21 116 sind eingefärbte Polyacrylatplatten mit Steindekor bekannt. Dabei wird die verwendete Vorstufe des Matrixpolymerisats homogen eingefärbt und anschließend ein gemahlenes, ebenfalls eingefärbtes Acrylharz eingetragen, das sich farblich von dem Matrixpolymerisat unterscheidet und im Matrixpolymerisat verteilt.

Nach Abschluß der Polymerisation werden dann die Formkörper, in deren Bodenbereich sich das ursprünglich gemahlene Acrylharz abgesetzt hat, entformt.

In der EP-A 640 651 ist ein hochgefüllter Kunststoff-Formkörper mit Graniteffekt auf Polymethylmethacrylatbasis unter Verwendung von 1 - 35 % metallfarbenen plättchenförmigen Schichtsilikaten in Partikelform beschrieben. Der durch diesen Einbau erzielte Glitzereffekt ist auf die Unterseite des Gußkörpers beschränkt, außerdem muß relativ viel dieses Materials eingesetzt werden.
Hier geht man bei der Herstellung von einer flüssigen Polymervorstufe PVS aus, der das Füllmaterial zugesetzt und die dann radikalisch nach dem Typus einer Kammerpolymerisation zur Polymerisation gebracht wird. Bewährt hat sich die Herstellung ausgehend von einer Polymervorstufe PVS aus 70 bis 95 Gew.-Teilen Methylmethacrylat und 5 bis 30 Gew.-Teilen eines PMMA-Praepolymerisats PP und gegebenenfalls bis ca. 5 Gew.-Teilen eines vernetzenden Monomeren und gegebenenfalls bis zu 5 Gew.-Teilen eines Silanisierungsmittels SIM. Zu einer derartigen Polymervorstufe PVS werden unter hochtourigem Rühren partikelförmige anorganische Füllstoffe FS, insbesondere Aluminiumhydroxid bzw. Aluminiumoxidhydrat in Anteilen von 30 bis 80 Gew.-% (bezogen auf die gebildete Füllstoffsuspension FSS zugegeben und gleichmäßig verteilt. In diese Suspensionen rührt man die plättchenförmigen Schichtsilikate ein. Die Mischung wird in einer formgebenden Polymerisationskammer radikalisch polymerisiert.

Um auf Kunststoffoberflächen den sehr dekorativen Glitzereffekt zu erzeugen, bieten Pigmenthersteller eine Reihe von Produkten an. Es werden für diesen Zweck durchwegs Produkte auf anorganischer Basis, z.B. Metallplättchen oder natürliche Glimmerplättchen eingesetzt. Beispielhaft sei Stoneware Mica der Fa. Merck, Darmstadt, genannt. Durch deren relativ hohe Dichte im Vergleich zur Polymermatrix ist die Gefahr des Absetzens während der Aushärtung gegeben. Man setzt hier größere Mengen des Materials ein, meist mehr als 5 Gew.%, was aber das Endprodukt verteuert. Zudem ist das Endprodukt, was die Lebendigkeit des Glitzereffekts anbelangt, nicht ganz befriedigend.

### Aufgabe und Lösung

Es besteht somit Bedarf, Kunststoffoberflächen mit Steindekor durch einen ausgeprägten Glitzereffekt besonders lebendig und attraktiv zu gestalten. Die Erfindung sollte universell auf Kunststoff-Formkörper verschiedener Herstellungsart angewandt werden können, also ganz gleich, ob sie durch Extrusion oder Spritzguß eines thermoplastischen Polymeren oder durch Gußpolymerisation in einer formgebenden Kammer erzeugt worden sind. Der Effekt sollte auch nicht auf eine einzige Fläche des Formkörpers, nämlich die Unterseite, beschränkt sein - nach dem Stande der Technik wird er im Zuge des Aushärtens oder des Polymerisierens in der Regel nur auf der Unterseite des Formkörpers erzielt - sondern auch vor allem an den Seitenflächen, die eventuell Schnittkanten sein können, aber auch an der Oberseite vertreten sein.

Außerdem ist erwünscht, daß diese Art der Oberflächengestaltung den Formkörper möglichst wenig verteuert, was z.B. möglich ist, wenn man den Effekt bereits mit einem geringen Einsatz an wirkungsspezifischen Ingredienzen erzielen kann.
Die Aufgabe wurde gelöst, indem man in hochgefüllten Kunststoff-Formkörpern, enthaltend 30 bis 80 Gew.-% eines anorganischen feinteiligen Füllmaterials FS, 0,1 bis 5 Gew.-% Flitterteilchen FT mit einer Dichte von < 2 und mit einem Durchmesser von 100 bis 2 000 µm einbaut. Es wird damit eine Oberfläche von steinähnlichem Aussehen mit ausgeprägtem Glitzereffekt erzielt.
Die spezielle Auswahl der Flitterteilchen FT ist ein wesentliches Kennzeichen der Erfindung. Es wurde gefunden, daß Flitterteilchen mit einer Dichte von < 2, bevorzugt mit Dichten im Bereich 1,3 bis 1,7, besonders geeignet sind. Sie lassen sich - wohl infolge der geringen Dichteunterschiede im Vergleich zur umgebenden Polymermatrix - besonders homogen im Polymeren verteilen, ohne sich im Zuge des Aushärtens oder der Polymerisation an der Unterseite des Formkörpers abzusetzen. Dadurch ist gewährleistet, daß der Glitzereffekt nicht nur auf der Unterseite des Formkörpers, sondern auch auf der Oberseite und vor allem auf den Seitenflächen, die auch Schnittkanten sein können, erscheint. Gerade dann, wenn mehrere Flächen des Formkörpers einsehbar sind, z.B. an einer Tischplatte, wirkt diese gleichmäßige Verteilung des Glitzereffektes optisch vorteilhaft. Es ist auch von technischem Vorteil, wenn Ober- und Unterseite der Platte gleichermaßen verwendet werden können. Flitterteilchen mit dieser geringen Dichte sind im Handel erhältlich. Sie sind durchwegs aus Kunststoff. Genannt seien z.B. Flitterteilchen aus Polyester, die auch metallisch glänzend beschichtet sein können. Oft sind sie mit einein Schutzlack aus Epoxydharzen versehen. Sie besitzen eine Dichte von ca. 1,4.

Der Teilchendurchmesser der Flitterteilchen liegt erfindungsgemäß im Bereich von 100 bis 2 000 µm. Bevorzugt werden Teilchen mit einem mittleren Durchmesser von 200 bis 500 µm eingesetzt. Die Flitterteilchen sind plättchenförmig, ihre Dicke erreicht meist nur 1/20 bis 1/10 ihrer Ausdehnung.
Es ist ein Kennzeichen der Erfindung, daß man den Glitzereffekt bereits mit einer geringen Zusatzmenge an Flittermaterial, nämlich 0,1 bis 5 Gew.-% bezogen auf das Endprodukt, erzielt. In der Regel kommt man auch mit geringeren Mengen aus. So kann man mit weniger als 2 Gew.-%, speziell sogar mit nur 0,5 bis 1 Gew.-% an Flittermaterial bereits einen ausgeprägten Glitzereffekt erzielen.

Die erfindungsgemäßen Flitterteilchen können in hochgefüllten Kunststoff-Formkörpern unterschiedlicher Herstellung eingebaut werden. Eine Möglichkeit ist der Einbau in Thermoplasten nach dem Verfahren der Extrusion oder des Spritzgusses.
Die relativ hohen Scherkräfte, welche die in diesem Bereich eingesetzten Maschinen entwickeln, verlangen eine sorgfältige Auswahl der Verarbeitungsschritte. Hohe Scherkräfte sollen vermieden werden, um die Flitterteilchen nicht zu zerstören. Daher wird dem schonendsten Verfahren der Vorzug gegeben werden. Auf spezielle Knet-, Scher- und Mischverfahren ist nach Möglichkeit zu verzichten.
Die Flitterteilchen können dabei direkt dem bereits hochgefüllten Granulat durch Auftrommeln zugeführt werden. Es ist aber auch möglich, bei der Herstellung des Granulats die Flitterteilchen zugleich mit den Füllstoffen einzubauen. Für die Extrusion sollte nach Möglichkeit der Einbau der Flitterteilchen über Masterbatch erfolgen. Der Einbau der Flitterteilchen in hochgefüllte Gießharze verlangt eine besondere Vorgehensweise und eine ganze Reihe von zusätzlichen Maßnahmen (siehe unten). Dabei können aber Oberflächen mit besonders effektvollem Glitzereffekt erzielt werden. Der Einbau der Flitterteilchen in Gießharze ist eine wichtige Ausführungsform der Erfindung.

Bezüglich des Materials der Polymermatrix des verwendeten hochgefüllten Kunststoffes sind in Anlehnung an den Stand der Technik alle Materialien geeignet, die im Spritzguß, bei der Extrusion und bei der Gießharzherstellung verwendet werden. Genannt seien PVC, Polyethylen, Polycarbonat, Polystyrol, Polyester und Polymethylmethacrylat. Letzteres Material ist bevorzugt. Der Glitzereffekt kommt in diesem Material besonders gut zur Geltung. Die Polymermatrix soll dabei aus mindestens 60 Gew.-%, bevorzugt aber aus mindestens 80 Gew.-% Polymethylmethacrylat bestehen.

Bezüglich des Aussehens des Steindekors sind die Variationsmöglichkeiten breit. Farben und Größe der Füllstoffe können nach Belieben gewählt und kombiniert werden, wobei auch in der Natur nicht vorkommende gesteinsähnliche Strukturen geschaffen werden können. In der Mehrzahl der Fälle wird man aber versuchen, eine natürliche Gesteinsoberfläche zu imitieren. Besonders beliebt sind Marmor- und vor allem Granitoberflächen.

Für die bevorzugte Ausführungsform, nämlich dem Einbau des Flittermaterials in ein Gießharz auf Basis Polymethylmethacrylat kann nach dem Stand der Technik verfahren werden. Im folgenden wird eine spezielle Ausführungsform beschrieben.
Die spezielle Ausführungsform der Erfindung, die eine besonders effektvolle und natürliche Granitoberfläche ergibt, besteht darin, in eine hochgefüllte Füllstoff-Suspension FSS sowohl die Flitterteilchen FT, als auch verschiedenfarbige Mahlgutteilchen GP mit Teilchendurchmessern bis ca. 5 mm einzurühren und daran anschließend die Polymerisation vorzunehmen. Als derartig verschiedenfarbige Mahlgutteilchen bieten sich vorteilhaft solche aus dem gehärteten, gefüllten Polymermaterial selbst an, beispielsweise gemahlenes Recycling-Material. Die praktische Erfahrung lehrt jedoch, daß im Falle der Einarbeitung von gefülltem, gemahlenem PMMA-Polymermaterial wenigstens zwei gravierende Probleme auftreten:
- Die Mahlgutteilchen sedimentieren in Abhängigkeit von ihrer Teilchengröße und der Dauer bis zum Erreichen des Gelzustandes der Polymerisation in stark unterschiedlicher Weise, so daß eine reproduzierbare Struktur nicht erreicht werden kann.
- Die Mahlgutteilchen aus Recyclat quellen in der Füllstoff-Suspension FSS so schnell an, daß der eintretende Viskositätsanstieg das Verfüllen in die Polymerisationskammern nahezu unmöglich macht und bestenfalls eine verwaschene Struktur entsteht.

Es bestand daher die Aufgabe, ein Verfahren zur Verfügung zu stellen, das die Einarbeitung von gefülltem, gemahlenem Polymermaterial gestattet unter Vermeidung der oben genannten Probleme und der daraus resultierenden nachteiligen Folgen für das gebildete Polymermaterial. Die Lösung der vorliegenden Aufgabe im Rahmen der vorliegenden Erfindung beruht auf einer Kombination zweckmäßiger Maßnahmen.
1. Das Mahlgutmaterial wird in seiner Dichte genau an die Dichte der Füllstoff-Suspension FSS angepaßt. Dadurch wird die Sedimentation auch über längere Zeiten hinweg verhindert und es findet auch keine unterschiedlich starke Sedimentation von unterschiedlich großen Teilchen (keine "Klassierung") statt. Die Dichteanpassung wird zweckmäßig gesteuert über die Füllstoffkonzentration im Mahlgut.
2. Zur Vermeidung des Viskositätsanstiegs innerhalb der Verarbeitungszeit wird das Mahlgutpolymere mit ca. 10 Gew.-% mindestens eines vernetzenden Monomeren vernetzt.

Die Erfindung betrifft somit ein Verfahren zur Herstellung hochgefüllter Kunststoffe auf Polymethylmethacrylatbasis nach dem Gießverfahren, ausgehend von einer Polymervorstufe PVS aus Methylmethacrylat und einem Polymethylmethacrylat-Praepolymerisat PP, die durch Zusatz mindestens eines partikelförmigen anorganischen Füllstoffs FS in Anteilen von 30 bis 80 Gew.-% (bezogen auf die Füllstoff-Suspension) unter hochtourigem Rühren in eine Füllstoff-Suspension FSS überführt und unter Zusatz mindestens eines radikalischen Initiators in einer geeigneten Form polymerisiert wird, dadurch gekennzeichnet, daß man der Füllstoff-Suspension FSS das Flittermaterial FT, sowie verschiedenfarbiges, gefülltes, gemahlenes Polymermaterial GP in Mengen von 1 bis 20 Gew.-Teilen (bezogen auf die Füllstoff-Suspension FSS) unter Rühren zusetzt, mit der Maßgabe, daß die Dichte des Mahlgutmaterials GP genau an die Dichte der Füllstoffsuspension angepaßt wird und daß der polymere Bestandteil des Mahlgutmaterials GP vernetzt ist.

### Das Mahlgut GP

Das Mahlgut GP hat in der Regel einen Teilchendurchmesser im Bereich von 0,02 bis ca. 5 mm. Es wird im allgemeinen aus gleichartigem polymerisiertem Material gewonnen, wie dasjenige, aus dem die Füllstoff-Suspension FSS gebildet wird, allerdings unter Beachtung der beanspruchten Merkmale hinsichtlich Dichteanpassung und Vernetzung. Die Dichteanpassung wird gesteuert über die Füllstoffkonzentration im Mahlgut. Als beispielhafte Ausführung sei etwa genannt eine Konzentration an Aluminiumhydroxid als partikelförmigem anorganischem Füllstoff FS in der Füllstoff-Suspension FSS von 66 Gew.-%, während sich im Mahlgutmaterial GP ca. 44 - 55 Gew.-% desselben befinden. Es wurde dabei die Dichte der Füllstoffsuspension FSS von ca. 1,6 nachgestellt. Es sei vermerkt, daß auch die Flitterteilchen FT, die zugleich mit dem Mahlgut GP eingearbeitet werden, eine vergleichbare Dichte besitzen. Polyesterflitter haben z.B. eine Dichte von 1,4. Somit bewegen sich die Dichten von Füllstoffsuspensionen FSS; Mahlgut GP und Flittermaterial FT vorteilhaft in einem engen Bereich zwischen 1,3 und 1,7.
Die Herstellung des polymeren Mahlgutmaterials GP erfolgt nach im wesentlichen gleichem Verfahren wie die Herstellung des PMMA-Basismaterials, also durch Einrühren eines Füllstoffs in eine aus Praepolymerisat und Monomeren bestehende Polymervorstufe, und es kommen im Prinzip die gleichen Monomeren zur Anwendung, wobei jedoch das Mahlgutmaterial GP stets durch Zusatz eines oder mehrerer vernetzender Monomerer vernetzt ist. Als Vernetzer dienen an sich übliche, mehrere polymerisationsfähige Reste im Molekül enthaltende Monomere, wie z.B. die (Meth)acrylsäureester mehrwertiger Alkohole oder Allylester (vgl. H. Rauch-Puntigam, Th. Völker, Acryl- und Methacrylverbindungen, Springer-Verlag 1986). Genannt seien z.B. Ethylenglykoldi(meth)acrylat, 1,4-Butandioldi(meth)-acrylat, Triethylenglykoldi(meth)-acrylat, Trimethylolpropantri(meth)acrylat.
Der Anteil an vernetzenden Monomeren liegt dabei relativ hoch, im allgemeinen bei mindestens 1 Gew.-% und bis zu 20 Gew.-%, beispielsweise um 15 Gew.-%, bezogen auf die Gesamtheit der Monomeren. Im unvernetzten Zustand liegt das Molekulargewicht im Bereich 2 x 10⁵ bis 5 x 10⁶ Dalton.

Als Füllstoffe FS eignen sich auch hier die einschlägig für Gießharze verwendeten feinteiligen anorganischen Materialien. Der Gehalt an den Füllstoffen FS wird so bemessen, daß das Mahlgutmaterial GP genau die Dichte der Füllstoff-Suspension FSS besitzt. Das polymere Mahlgutmaterial GP wird vorteilhaft aus zweckmäßig eingefärbtem Polymerisat gewonnen. Als Farbmittel FM können dabei Pigmente oder Farbstoffe der einschlägig verwendeten Art angewendet werden.
Als Beispiele seien Eisenoxid, Titandioxid, Zinkweiß, Ultramarinblau, Cu-Phthalocyanine und Ruß genannt. Die Pigmente können auch als vorgebildete Dispersionen mit Hilfe geeigneter Dispergiermittel in die Praepolymerphase bei der Herstellung des Mahlguts eingebracht werden. Im allgemeinen liegt der Gehalt an den Farbmitteln FM im Bereich 0,2 bis 5 Gew.-% bezogen auf das dem Mahlgut GP zugrundeliegende Polymer.

### Die Füllstoffsuspension FFS

Die Füllstoffsuspension besteht aus einer Polymervorstufe PVS, die die Monomeren und das Praepolymerisat PP enthält, und aus den Füllstoffen FS. Die Herstellung der Füllstoff-Suspension FSS erfolgt zweckmäßig in an sich bekannter Weise (vgl. EP-B 218 866; DE-A 42 25 309). Als Praepolymerisat PP kommen z.B. die einschlägig verwendeten PMMA-Polymerisate infrage, die gegebenenfalls untergeordnete Anteile an zweckmäßig ausgewählten Comonomeren, wie weitere Acryl- und/oder Methacrylsäureester, insbesondere C₁-C₈-Alkylester enthalten können. Der Anteil der Praepolymerisate liegt bei 5 - 30 Gew.-% bezogen auf die Gesamtheit der polymerisationsfähigen Materialien.
Ferner kann die Füllstoff-Suspension FSS noch an sich bekannte vernetzende Monomere enthalten, beispielsweise solche mit mindestens zwei polymerisationsfähigen Vinylgruppen im Molekül (vgl. H. Rauch-Puntigam, Th. Völker, "Acryl- und Methacrylverbindungen", Seite 184, Springer-Verlag, 1967), wobei exemplarisch Ethylenglykol-di(meth)acrylat, 1,4-Butandioldi(meth)acrylat, Triethylenglykoldi(meth)acrylat, Trimethylolpropantri(meth)acrylat, sowie Allylverbindungen wie Allylmethacrylat oder Triallylcyanurat genannt seinen. Der Gehalt an vernetzenden Monomeren in der Füllstoff-Suspension FSS liegt im allgemeinen bei 0,01 bis 10 Gew.-%, vorzugsweise bei 0,1 bis 5 Gew.-% bezogen auf den Monomergehalt.
Die Füllstoff-Suspension FSS hat (bezogen auf Praepolymerisat PP plus Monomere) einen Gehalt von über 60 Gew.-%, speziell von 80 bis 100 Gew.-% an Methylmethacrylat. Als Comonomere können, wie bereits ausgeführt, weitere mit MMA copolymerisierbare Monomere verwendet werden, beispielsweise die schon genannten (Meth)acrylsäureester sowie Vinylaromaten und heterocyclischen Vinylverbindungen, so z.B. Styrol, ringsubstituierte Styrole, α-Methylstyrol, Vinylpyrrolidon, Vinylimidazol, Acrylnitril und Methacrylnitril, Vinylester wie Vinylacetat oder Vinylpropionat. Im allgemeinen überwiegt neben MMA der Anteil der (Meth)acrylsäureester und der vernetzenden Monomeren, die zusammen mit MMA vorteilhaft bis 100 Gew.-% der gesamten Polymervorstufe PVS ausmachen können.

Besonders günstig ist ein Gemisch aus dem Monomeren Methylmethacrylat und einem vernetzenden Monomeren, wie beispielsweise Glykoldimethacrylat, wobei das Gewichtsverhältnis vorteilhaft zwischen 95:5 und 99,9 : 0,1 liegt. Vielfach enthält die Polymervorstufe PVS die Monomeren, die auch das Praepolymerisat PP bilden, und in denselben Proportionen, sie können aber auch verschieden sein. Vorzugsweise sind die Praepolymerisate in den Monomeren gelöst, sie können aber auch darin dispergiert sein. In der Regel haben die Praepolymerisate mittlere Molekulargewichte M_{w} im Bereich zwischen 2 x 10⁴ und 8 x 10⁵ Dalton (Bestimmung durch Gelpermeations-chromatographie, vgl. hierzu: H.F.Mark et al, Encyclopedia of Polymer Science an Technology, Vol. 10, Seiten 1 bis 19, J. Wiley, 1987). Beispielsweise kann das Praepolymerisat ein Copolymerisat aus Methylmethacrylat und Methylacrylat im Gewichtsverhältnis 9 : 1 mit einem mittleren Molekulargewicht M_{w} von etwa 2,5 x 10⁵ Dalton sein.
Als partikelförmige anorganische Füllstoffe FS kommen in erster Linie Aluminiumoxide, Aluminiumhydroxide bzw. Aluminiumoxidhydrate infrage. Gegebenenfalls können noch weitere an sich bekannte partikelförmige Füllstoffe wie Erdalkalioxide, Siliciumoxid und/oder Titanoxid in verschiedenen Modifikationen, Tone, Silikate, Kohle, Metalle oder Metallegierungen, Metall-Oxide, synthetische Materialien wie Keramik, Glasmehl, Prozellan, Schlacke oder feinverteiltes Siliciumdioxid, Quarze, Koalin, Talkum, Glimmer, Feldspat, Apatit, Baryte, Gips, Kreide, Kalkstein, Dolomit oder Gemische der vorstehend genannten Komponenten zur Anwendung kommen.

Zweckmäßig wird bei den anorganischen Füllstoffen eine mittlere Korngröße der Füllstoffteilchen von 100 µm (Durchmesser), vorzugsweise von 75 µm, nicht überschritten. Bei einer besonderen Ausführungsart stellt der Füllstoff ein Gemisch aus mindestens 2 Komponenten dar, deren mittlere Durchschnitts-Korngrößen solchermaßen beschaffen sind, daß ein Größenverhältnis zwischen den mittleren Durchschnittsgrößen der großen Füllstoffteilchen und denjenigen der kleinen Füllstoffteilchen zwischen 10 : 1 und 2 : 1, bevorzugt zwischen 6 : 1 und 4 : 1 vorliegt. Füllstoffteilchen mit einer Korngröße < 0,1 µm sollen dabei nicht mehr als 10 % des Volumens aller Füllstoffteilchen ausmachen. Die Teilchengröße wird gemäß den üblichen Verfahren bestimmt, wobei zur Teilchengrößenbestimmung als Durchmessser die jeweils größten Abmessungen der Partikel herangezogen werden (vgl. beispielsweise B. Scarlett, Filtration & Separation, Seite 215, 1965). Das Mengenverhältnis zwischen großen und kleinen Füllstoffteilchen liegt im allgemeinen zwischen 4 : 1 und 1 : 4, bevorzugt zwischen 2 : 1 und 1 : 2, besonders bevorzugt bei 1 : 1.
Bevorzugt ist der anorganische Füllstoff so beschaffen, daß das ausgehärtete Gießharz einen elastischen Schermodul von wenigstens 5 GNm⁻², bevorzugt von wenigstens 10 GNm⁻² aufweist, wobei bei der Einstellung der mechanischen Eigenschaften die vorgesehene Anwendung der Gießharze im Auge zu behalten ist.
Der Füllstoffanteil an den Gießharzen der vorliegenden Erfindung beträgt vorzugsweise mindestens 40 Gew.-%. Im allgemeinen wird ein Anteil von 80 Gew.-% nicht überschritten, wobei als Richtwert ein Füllstoffgehalt der Gießharze von 50 bis 80 Gew.-% angegeben sei. Die Herstellung der Füllstoffe in den zweckmäßigen Korngrößen kann nach den bekannten Verfahren erfolgen, beispielsweise durch Brechen und Mahlen.

### Die Herstellung der Gießharz-Suspensionen

Zweckmäßigerweise geht man bei der Herstellung der Gießharz-Suspensionen von der flüssigen Polymervorstufe PVS aus, welche die Monomeren und die Praepolymersate PP enthält und welche die flüssige organische Phase bildet. In die organische Phase wird nun mit Hilfe mechanischer Dissolver der anorganische Füllstoff FS eingetragen. Bei Anwendung von Fraktionen verschiedener Partikelgröße können die Füllstoffteilchen-Fraktionen einzeln zugegeben werden, wobei die Reihenfolge der Zugabe der Füllstoffteilchen unterschiedlicher Größe nicht festgelegt ist. Der Vorgang ist in der Regel nach 10 Minuten abgeschlossen. Danach wird die erhaltene Füllstoff-Suspension (FSS) über einen Zeitraum von etwa 10 Minuten am Dissolver oder in einem äquivalenten Dispergierapparat dispergiert, wobei die Umlaufgeschwindigkeit des Dissolvers etwa 10 bis 20 Meter pro Sekunde beträgt. Im allgemeinen werden die anorganischen Füllstoffe der organischen Phase solchermaßen zugegeben, daß die Viskosität nicht über einen Wert von etwa 10 Pa s steigt. Der Zusatz des Mahlgutmaterials GP und der Flitterteilchen FT geschieht zweckmäßigerweise bei Raumtemperatur vor Zugabe des Initiators und des Trennmittels.
Anschließend löst man die Polymerisationshilfsmittel, wie an sich bekannte Polymerisationsinitiatoren in Mengen von 0,1 bis 5 Gew.-% bezogen auf die Monomeren. Als Polymerisationsinitiatoren werden Radikalbildner eingesetzt, deren Zerfall in Radikale thermisch oder durch Redox-Prozesse induziert werden kann. Grundsätzlich sind alle diejenigen geeignet, die bereits bei tiefen Temperaturen einen hohen Radikalstrom liefern (vgl. J. Brandrup, E.H. Immergut, "Polymer Handbook" 3rd. Ed., Kapitel III, Seiten 1 bis 65, J. Wiley, 1989). Zweckmäßigerweise erfolgt der Zusatz der Initiatoren erst kurz vor dem Verfüllen und Aushärten der Gießharz-Suspensionen.
Gegebenenfalls ist es von Vorteil, wenn die Gießharz-Suspensionen innere und/oder äußere Trennmittel enthält, die das Anhaften des gehärteten Gießharzes an der Form verhindern und eine gute Oberflächenbeschaffenheit der Gießharz-Formteile bewirken. Beispiele für innere Trennmittel sind Fettsäuren sowie deren Alkali- und Erdalkalisalze und Alkylphosphate sowie deren neutralisierte Derivate. Zu geeigneten äußeren Formtrennmitteln gehören auf den Formen befindliche Überzüge, beispielsweise aus Polytetrafluorethylen, Polyorganosiloxan oder Polyvinylalkohol.

### Herstellung der Gießharzformkörper

Die mit dem Polymerisationsinitiator versetzte, erfindungsgemäße Gießharz-Suspension läßt sich beispielsweise sehr gut in die üblichen Gießformen vergießen. Vorteilhafterweise wird die Suspension vor dein Verfüllen evakuiert. Die Härtung erfolgt vorzugsweise thermisch, beispielsweise durch Erhitzen auf 50 bis 80 Grad C während 20 bis 60 min, wobei die Härtung unter Anwendung von Druck wie auch ohne Druck verlaufen kann.
Mit Hilfe der erfindungsgemäßen Gießharz-Suspensionen lassen sich die vielfältigen Formen füllen und eine technisch einwandfreie Polymerisation durchführen. Auf diese Weise können Platten, Schüsseln, Waschbecken, Spülbecken, WC-Becken, Formkörper für Bauindustrie, Behälter u.a. hergestellt werden. Eine weitere vorteilhafte Ausgestaltung der Erfindung ist die kontinuierliche Plattenherstellung auf einem Förderband. Dabei wird die mit einem geeigneten Polymerisationsinitiator versetzte Gießharz-Suspension auf ein laufendes Förderband mit seitlichen Begrenzungen aufgebracht, wobei sie sich aufgrund ihrer niedrigen Viskosität und ihrer geringen Strukturviskosität schnell verteilt und nivelliert. Danach wird die Oberfläche der Suspension mit einem zweiten Metallband abgedeckt. Die Härtung der Suspension kann thermisch entweder durch Heizen der beiden Metallbänder erfolgen oder bei verwendung geeigneter Redox-Initiatoren auch ohne Fremdheizung durchgeführt werden.
Die Restmonomerengehalte der gehärteten Gießharze liegen unterhalb 1 Gew.-% bezogen auf den Gesamtmonomerenanteil, bevorzugt unter 0,5 Gew.-%.

### Vorteilhafte Wirkungen der Erfindung

Die speziellen erfindungsgemäßen Gießharz-Suspensionen lassen sich sehr gut in die üblichen Gießformen vergießen. Damit wird eine große Formenvielfalt, insbesondere mit komplizierten Formen, zugänglich, wobei eine einwandfreie und vollständige Polymerisation gewährleistet ist. Die konsequente Umsetzung der vorgängig geschilderten Maßnahmen führt im Gießverfahren - auch bei Standzeiten der flüssigen Phase von beispielsweise 2 Stunden - zu einem gefüllten Polymerisat mit **einheitlicher** Struktur auf Ober- und Unterseite der gebildeten Platten. Die Möglichkeit der Verwendung von Ober- und Unterseite einer Platte, vorzugsweise einer solchen mit Granitcharakter stellt einen nicht unerheblichen technischen Vorteil dar. Die Oberflächen der Platten zeigen einen gleichmäßigen, lebendigen Glitzereffekt.

### BEISPIELE

### Beispiel 1

### A) Herstellung von Mahlgut weiß

In 410 g MMA werden 80 g PLEXIGUM ® M920 und 0,01 g 2,4-Dimethyl-6-tert.-butylphenol bei ca. 50 Grad C innerhalb 5 Stunden gelöst und danach auf Zimmertemperatur abgekühlt. In diesem MMA/PMMA-Sirup werden 5,0 g Stearinsäure und 50 g Glykoldimethacrylat gelöst. Am Dissolver werden unter mäßigem Rühren 210 g Martinal ® ON 310, 210 g Martinal ® OS, 20 g Aerosil ® 200 und 15 g Kronos ® 2057 in den Sirup eingetragen. Danach wird die Suspension mit dem Dissolver mit ca. 20 m/sec. ca 10 Minuten dispergiert. In der auf Raumtemperatur abgekühlten Suspension werden 1 g Bis-(4-tert.-butylcyclohexyl)peroxidicarbonat gelöst und die eingeschlossenen Luftbläschen unter Anlegen eines Vakuums innerhalb sehr kurzer Zeit aus der Suspension entfernt.
Aus zwei hochglanzpolierten und verchromten Metallplatten (Dicke 4 mm) wird mit Hilfe einer runden PVC-Schnur (Durchmesser 6,0 mm) eine Kammer gebaut. In den Zwischenraum der Metallkammer wird die Suspension eingegossen und die Kammer verschlossen.
Die gefüllte Kammer wird in ein Wasserbad von 45 Grad C eingelegt. Die Polymerisationszeit beträgt 120 Minuten. Anschließend wird in einem Trockenschrank 30 Minuten bei 105 Grad C endpolymerisiert. Danach wird die Kammer entformt und der ausgehärtete Gießling entnommen.

Der Gießling wird in kleine Stücke zerbrochen und diese in einer geeigneten Mühle gemahlen. Danach wird mit einem Sieb die Mahlgutfraktion 0 - 630 µm ausgesiebt. Die gröberen Anteile werden nochmals gemahlen und ebenfalls ausgesiebt.

### Erläuterungen:

- Plexigum ® M920 =: PMMA Perlpolymerisat mit einem η_{sp/C} von 130 - 140
Hersteller: Röhm GmbH
- Martinal ® ON 310/0S =: Aluminiumhydroxid
Hersteller: Martinswerke
- Aerosil ® 200 =: hochdisperses amorphes Siliciumdioxid
Hersteller: Degussa
- Kronos ® 2057 =: Titandioxid
Hersteller: Kronos

### B) Herstellung von Mahlgut schwarz

Die Herstellung ist analog wobei anstelle 15 g Kronos ® 2057 15 g Bayferrox ® 318 M verwendet wird

### Erläuterung:

- Bayferrox ® 318 M =: Eisen(III)oxid
Hersteller: Bayer

### C) Herstellung einer hochgefüllten Kunststoff-Platte mit Granit-Charakter und Glitzereffekt

In 296,99 g MMA und 0,01 g 2,4-Dimethyl-6-tert-butylphenol werden 30 g Plexigum ® M920 bei ca. 50 Grad C innerhalb 5 Stunden gelöst und danach auf Zimmertemperatur abgekühlt. In diesem Sirup werden 5,0 g Stearinsäure und 3,0 g Glykoldimethacrylat gelöst. Am Dissolver werden unter mäßigem Rühren 332,5 g ALCOA ® C33 (Aluminiumhydroxid mit einer mittleren Teilchengröße von 45 µm) und danach 332,5 g ALCOA ® C333 (Aluminiumhydroxid mit einer mittleren Teilchengröße von 8 µm) in den Sirup eingetragen. Danach wird die Suspension mit dem Dissolver mit 20 m/sec. ca. 10 Minuten dispergiert. Zu der Suspension rührt man mit einem Flügelrührer 90,2 g Mahlgut weiß gemäß A) und 19,8 g Mahlgut schwarz gemäß B) und 8,3 g Polyesterflitter 25/90 R der Fa. Dragon Werk Georg Wild GmbH, Bayreuth, ein. Das Flittermaterial ist silberglänzend und hat eine Größe von 0,4 x 0,4 x 0,025 mm. Die Rührzeit beträgt im Normalfall ca. 30 Minuten, kann aber auch deutlich verlängert werden.
Danach werden in der Füllstoffsuspension 5 g Bis-(4-tert.-butylcyclohexyl)-peroxidicarbonat und 1 g 2,2'-Azobis-(isobutyronitril) gelöst und die eingeschlossenen Luftbläschen unter Anlegen eines Vakuums innerhalb sehr kurzer Zeit aus der Suspension entfernt.
Aus zwei hochglanzpolierten und verchromten Metallplatten (Dicke 4 mm) wird mit Hilfe einer runden PVC-Schnur (Durchmesser 4,2 mm) eine Kammer gebaut. In den Zwischenraum der Metallkammer wird die Suspension eingeschlossen und die Kammer verschlossen.

Die gefüllte Kammer wird in ein Wasserbad von 65 Grad C eingelegt. Die Polymerisationszeit beträgt 20 Minuten. Anschließend wird in einem Trockenschrank 30 Minuten bei 105 Grad C endpolymerisiert. Danach wird die Kammer entformt und der ausgehärtete Gießling entnommen. Der Plattengießling hat beidseitig hochglänzende Oberflächen, ist nicht durchgebogen und besitzt auf beiden Seiten ein visuell identisches, natürliches Granitdekor mit ausgeprägtem Glitzereffekt.
Durch Mattieren, d.h. Abschleifen der hochglänzenden Flächen, wird eine angenehm matte, griffeste Oberfläche erreicht, wobei sich der Glitzereffekt noch verstärkt.

## Patentansprüche

1. Hochgefüllte Kunststoff-Formkörper enthaltend 30 bis 80 Gew.-% eines anorganischen feinteiligen Füllmaterials FS mit einer Oberfläche vom Aussehen eines mikrokristallinen Gesteins mit ausgeprägtem Glitzereffekt,
dadurch gekennzeichnet,
daß der Glitzereffekt durch Einbau von 0,1 bis 5 Gew.-% von Flitterteilchen FT mit einer Dichte von < 2 und mit einem Durchmesser von 100 bis 2 000 µm erzeugt wird.

2. Hochgefüllte Kunststoff-Formkörper entsprechend Anspruch 1, dadurch gekennzeichnet, daß sie in einer Formkammer nach dem Gießverfahren hergestellt werden.

3. Hochgefüllte Kunststoff-Formkörper entsprechend den Ansprüchen 1 oder 2, dadurch gekennzeichnet, daß der Polymeranteil zu mindestens 60 Gew.-%, bevorzugt zu mindestens 80 Gew.-% aus Polymethylmethacrylat besteht.

4. Verfahren zur Herstellung von hochgefüllten Kunststoffen entsprechend Anspruch 3, ausgehend von einer flüssigen Polymervorstufe PVS, die aus Monomeren und einem Praepolymerisat PP besteht, und die durch Zusatz des partikelförmigen anorganischen Füllstoffs FS unter hochtourigem Rühren in eine Füllstoffsuspension FSS überführt und unter Zusatz eines radikalischen Initiators in einer Formkammer polymerisiert wird, dadurch gekennzeichnet, daß man der Füllstoffsuspension FSS sowohl das Flittermaterial FT, als auch verschiedenfarbiges, gefülltes Polymermaterial GP, letzteres in Mengen von 1 bis 20 Gew.-% (bezogen auf die Füllstoffsuspension FSS), unter Rühren zusetzt, mit der Maßgabe, daß die Dichte des Mahlgutmaterials GP an die Dichte der Füllstoffsuspension FSS angepaßt wird und daß der polymere Bestandteil des Mahlgutmaterials GP hoch vernetzt ist.

5. Verfahren zur Herstellung von hochgefüllten Kunststoffen entsprechend Anspruch 4, dadurch gekennzeichnet, daß die Dichten von Mahlgut GP, Füllstoffsuspension FSS und Flittermaterial FT im Bereich von 1,3 bis 1,7 liegen.

6. Verfahren gemäß Anspruch 4 oder 5, dadurch gekennzeichnet, daß der polymere Bestandteil des Mahlgutmaterials GP mit ca. 1 bis 20 Gew.-% mindestens eines vernetzenden Monomeren vernetzt ist.

7. Verfahren gemäß Anspruch 6, dadurch gekennzeichnet, daß der polymere Bestandteil des Mahlgutmaterials GP mit ca. 15 Gew.-% mindestens eines vernetzenden Monomeren vernetzt ist.

8. Verfahren gemäß den Ansprüchen 4 bis 7, dadurch gekennzeichnet, daß das gemahlene Polymermaterial GP einen Teilchendurchmesser im Bereich 0,02 bis ca. 5 mm besitzt.

9. Verfahren gemäß den Ansprüchen 4 bis 8, dadurch gekennzeichnet, daß man der Füllstoffsuspension FSS mindestens 2 verschiedenfarbige, gemahlene Polymermaterialien GP zusetzt.

10. Verfahren gemäß den Ansprüchen 4 bis 9, dadurch gekennzeichnet, daß man als partikelförmigen anorganischen Füllstoff FS Aluminiumhydroxid einsetzt.

11. Verfahren gemäß den Ansprüchen 4 bis 10, dadurch gekennzeichnet, daß man der Füllstoffsuspension FSS hochdisperses, amorphes Siliciumdioxid zusetzt.
